# FASCICULE DE BREVET EUROPEEN

(11) **EP 3 049 471 B1**
(45) Date de publication et mention de la délivrance du brevet: **15.11.2017**
(21) Numéro de dépôt: 14772127.8
(22) Date de dépôt: 23.09.2014
(51) Int. Cl.: C08K 5/41, C08L 23/12, H01M 10/052, H01M 8/02, H01M 12/06

(54) **COMPOSITIONS POLYMERES CONDUCTRICES D'IONS LITHIUM POUR GENERATEUR ELECTROCHIMIQUE AU LITHIUM**
POLYMERZUSAMMENSETZUNGEN ZUR LEITUNG VON LITHIUMIONEN AN ELEKTROCHEMISCHEN LITHIUMGENERATOR
POLYMER COMPOSITIONS THAT CONDUCT LITHIUM IONS FOR ELECTROCHEMICAL LITHIUM GENERATOR

(30) Priorité: 26.09.2013 FR 1359283
(43) Date de publication de la demande: 03.08.2016
(73) Titulaire: Commissariat à l'Énergie Atomique et aux Énergies Alternatives, 75015 Paris (FR)
(72) Inventeur: GAYOT, Charles, F-56800 Ploermel (FR); CHAROLOY, Jessica, F-38800 Le Pont De Claix (FR); GEBEL, Gérard, F-38120 Saint Egreve (FR); MAILLEY, Sophie, F-38730 Le Pin (FR); PICARD, Lionel, F-38170 Seyssinet-Pariset (FR)
(74) Mandataire: Brevalex
(86) Numéro de dépôt international: PCT/EP2014/070196
(87) Numéro de publication internationale: WO 2015/044113

(56) Documents cités:
- EP-A1- 2 450 985

## Description

La présente invention a trait à des compositions polymères conductrices d'ions lithium à base d'une association originale d'ingrédients.

Du fait de leur capacité à conduire des ions lithium, c'est donc ainsi tout naturellement que ces compositions peuvent trouver application dans le domaine des électrolytes, et notamment des électrolytes destinés à entrer dans la constitution de générateurs électrochimiques au lithium, et plus particulièrement :
- d'accumulateurs conçus pour être rechargés, tels que les batteries lithium-ion, les batteries lithium-métal (plus spécifiquement, les batteries lithium-soufre, les batteries lithium-air) ; ou
- de piles primaires à base de lithium (telles que les piles V₂O₅/Li et les piles Li/SoCl₂).

Les accumulateurs au lithium sont particulièrement intéressants pour les domaines où l'autonomie est un critère primordial, tels que cela est le cas des domaines de l'informatique, de la vidéo, de la téléphonie mobile, des transports tels que les véhicules électriques, les véhicules hybrides, ou encore des domaines médicaux, spatiaux, de la microélectronique.

Les batteries lithium-métal comportent classiquement au moins une cellule électrochimique, composée des éléments suivantes :
- une électrode négative à base de lithium métallique ;
- une électrode positive à base d'un composé apte à intercaler du lithium ; et
- une membrane électrolytique (pouvant être dénommée, également, coeur électrolytique) disposée entre ladite électrode négative et ladite électrode positive.

Outre son rôle de séparation physique entre les deux électrodes susmentionnées, la membrane électrolytique assure également la conduction des ions lithium entre l'électrode négative et l'électrode positive lors des processus de décharge et la conduction des ions lithium entre l'électrode positive et l'électrode négative lors des processus de décharge.

Pour ce faire, la membrane électrolytique se présente, classiquement, sous forme d'un séparateur imprégné par un électrolyte liquide conducteur d'ions, et plus spécifiquement, un électrolyte liquide comportant un ou plusieurs sels de lithium. Il existe essentiellement deux types de technologies concernant les séparateurs :
- les séparateurs poreux, dans lesquels l'électrolyte se situe dans la porosité des séparateurs ;
- les séparateurs gélifiés, dans lesquels l'électrolyte déploie les chaînes macromoléculaires constitutives du gel, afin de se mouvoir entre elles.

Toutefois, si le lithium métallique utilisé comme constituant des électrodes négatives permet l'obtention d'une tension nominale de cellule élevée et d'excellentes densités d'énergie massique et volumique, il peut s'avérer néfaste lors des processus de cyclage des accumulateurs. En effet, lors des processus de cyclage, le lithium métallique est alternativement expulsé, sous forme d'ions, lors des décharges, et redéposés, lors des charges sur l'électrode négative. Au bout d'un certain de nombre de cycles, des dendrites de lithium peuvent se former, ce qui, d'une part, peut contribuer à dénaturer l'intégrité physique de la membrane et, d'autre part, peut engendrer un phénomène de court-circuit, lorsque les dendrites relient physiquement l'électrode négative à l'électrode positive, ce qui se traduit par une élévation substantielle de la température de la batterie et sa dégradation irréversible.

Concernant les batteries lithium-air, celles-ci se composent classiquement, au niveau de chaque cellule électrochimique de base, d'une électrode négative formée d'un matériau à base de lithium, qui peut être soit du lithium métallique soit un alliage à base de lithium, comme spécifié dans FR 2,941,091, et une électrode positive du type électrode à air séparées par un électrolyte conducteur d'ions lithium.

Le fonctionnement d'une cellule électrochimique d'une batterie lithium-air à électrolyte organique se base, plus précisément, sur une réduction de l'oxygène à l'électrode positive par les ions Li⁺ présents dans l'électrolyte et provenant de l'électrode négative et sur une oxydation du lithium métallique à l'électrode négative, lors du processus de décharge, les réactions se produisant aux électrodes pouvant être symbolisées par les équations électrochimiques suivantes :
*à l'électrode positive (électrode à air) :

   2Li⁺ + 2e⁻ + O_{2(g)} → Li₂O₂ (s)

   (2,91 V vs Li⁺ /Li)

   2Li⁺ + 2e⁻ + (1/2) O₂ (g) → Li₂O (s)

   (3, 10 V vs Li⁺/Li)
*à l'électrode négative:

   Li₍ₛ₎ → Li⁺ + e⁻

Lors de l'utilisation d'un électrolyte aqueux, les équations électrochimiques illustrant le système sont les suivantes :
*à l'électrode positive (électrode à air) :

   O₂ + 2H₂O + 4e⁻ → 4 OH⁻

   (3,45 V vs Li⁺/Li)
*à l'électrode négative :

   Li₍ₛ₎ → Li⁺ + e⁻

L'électrode positive et l'électrode négative sont séparées par une membrane assurant, outre la séparation physique, la conduction des ions lithium, par la présence au sein de cette membrane d'un électrolyte conducteur d'ions lithium, qui peut être un électrolyte liquide organique (comme décrit dans Journal of the Electrochemical Society, 153 (2006), 96-100) ou un électrolyte liquide aqueux (comme décrit dans Journal of Power Sources, 189 (2009), 371-377).

Les principaux verrous de la technologie lithium-air, notamment lorsque l'électrolyte est un électrolyte aqueux sont les suivantes :
- la sécurité de l'accumulateur ; et
- la réversibilité des réactions électrochimiques aux électrodes.

En effet, concernant la sécurité de la batterie, celle-ci découle essentiellement de l'utilisation du lithium métallique ou d'alliage de lithium au niveau de l'électrode négative, lequel, lors du processus de décharge, migre et réagit avec l'oxygène pour former du peroxyde de lithium ou du LiOH (selon la nature de l'électrolyte) et, lors du processus de charge, peut être à l'origine de la création de dendrites de lithium.

Ces dendrites de lithium engendrent les inconvénients suivantes :
- elles peuvent court-circuiter la batterie et mettre ainsi en danger l'utilisateur ;
- elles peuvent contribuer, également, à diminuer grandement la cyclabilité de la batterie, dès lors que le contact électrique entre le lithium et le collecteur de courant adjacent se fait de plus en plus mal, au fur et à mesure que le nombre de cycles augmente ; et
- elles peuvent contribuer à endommager inéluctablement l'électrode négative, ce qui induit une limitation conséquente de la cyclabilité de la batterie (cette dernière pouvant être limitée à environ 50 cycles, ce qui ne permet pas une utilisation soutenue du système).

Concernant la réversibilité des réactions électrochimiques aux électrodes, notamment dans le cas des électrolytes organiques ou aqueux, il est à noter que les produits de décharge, comme Li₂O₂ ou Li₂O, insolubles sont amenés à se déposer dans la porosité de l'électrode à air, compromettant la réversibilité des réactions du fait de l'augmentation de la résistance interne et, par voie de conséquence, la tenue en cyclage de la batterie.

Pour tenter de pallier ces inconvénients, il a été proposé de protéger l'électrode négative d'un contact direct avec l'électrolyte en déposant à la surface de celle-ci une couche protectrice, d'une épaisseur d'au moins 200 µm (notamment pour des raisons de processabilité), en céramique conductrice d'ions lithium (comme décrit dans EP 2483964), qui présente, pour avantage, de présenter une bonne barrière physique à l'eau. Toutefois, l'utilisation d'une telle couche peut présenter les inconvénients suivantes :
- à l'issue d'un certain nombre de cycles, elle peut se décomposer, lorsque l'électrolyte est un électrolyte alcalin de pH supérieur à 10 ;
- l'épaisseur relativement importante de la couche protectrice contribue à augmenter la résistivité de cette dernière, ne permettant ainsi pas l'utilisation de la batterie à des régimes trop élevés ; et
- de par sa nature chimique (la céramique), la couche protectrice présente un caractère cassant, ce qui rend les manipulations difficiles et impose une épaisseur minimale, typiquement, de l'ordre de 200 µm.

La détérioration possible de la membrane a pour conséquence une diminution drastique de la conductivité de ladite membrane au cours du temps. Qui plus est, la membrane, avec le temps, devient perméable à l'électrolyte aqueux, qui peut ainsi entrer en contact avec l'électrode négative et causer son inflammation.

Ainsi, que ce soient pour les batteries du type lithium-métal ou du type lithium-air, il subsiste un besoin de trouver une solution pour pallier les inconvénients susmentionnés liés à l'utilisation d'un électrolyte liquide aqueux avec une électrode négative à base de lithium métallique.

### EXPOSÉ DE L'INVENTION

Les auteurs de la présente invention ont mis au point une composition innovante destinée à être appliquée sur une électrode négative d'un générateur électrochimique au lithium, tel qu'un accumulateur au lithium, en vue de constituer une solution à la problématique susmentionnée.

Cette composition est une composition polymère conductrice d'ions lithium comprenant les ingrédients suivantes :
- au moins un polymère ionique issu de la polymérisation d'un liquide ionique, dont le cation est porteur d'au moins un groupe polymérisable ;
- au moins un sel de lithium ; et
- au moins un polymère non ionique.

Plus spécifiquement, au vu des ingrédients susmentionnés, cette composition est une composition solide, c'est-à-dire dénuée d'eau et de solvant(s) organique(s), ce qui permet d'éviter les inconvénients liés à l'utilisation d'eau et de solvant(s) organiques lorsque ces compositions sont destinées à constituer des membranes en contact avec du lithium métallique.

De par l'association de ces ingrédients, les compositions de l'invention sont aptes à former une membrane polymère présentant les propriétés suivantes :
- une membrane conductrice d'ions lithium du fait, notamment, de la combinaison du polymère ionique susmentionné et du sel de lithium ;
- une membrane stable mécaniquement, chimiquement et électrochimiquement, lorsqu'elle est en amené en contact avec du lithium métallique ;
- une membrane stable vis-à-vis des électrolytes aqueux, qu'ils soient basiques (par exemple, contenant du LiOH) ou acides (par exemple, contenant de l'acide acétique ou de l'acide phosphorique) et, plus particulièrement, vis-à-vis des électrolytes même concentrés en sels de lithium dans une gamme de températures représentative de l'utilisation finale.

Le sel de lithium a pour fonction d'apporter des ions lithium à la composition, lui conférant ainsi une conduction ionique aux ions lithium.

Ce sel de lithium peut être choisi dans le groupe constitué par LiPF₆, LiClO₄, LiBF₄, LiAsF₆, LiCF₃SO₃, le *bis*(trifluorométhanesulfonyl)imide de lithium (connu sous l'abréviation LiTFSI) LiN[SO₂CF₃]₂, le *bis*(pentafluoroéthanesulfonyl)imide LiN (C₂F₅SO₂)₂ (connu sous l'abréviation LiBETI) et les mélanges de ceux-ci, la préférence se portant sur le LiTFSI et le LiBETI.

Le sel de lithium peut être présent, dans la composition, selon une concentration allant de 0,05 M à 5M, par exemple, de 1M à 2M.

Le sel de lithium, de par la nature chimique de son cation et/ou anion peut présenter un caractère hydrophobe.

Au sein de la composition, il est avantageusement solvaté par le polymère ionique, tel que défini ci-dessus.

Comme mentionné ci-dessus, le polymère ionique est un polymère issu de la polymérisation d'un liquide ionique, ce dernier comportant un cation porteur d'au moins un groupe polymérisable.

On précise que, par liquide ionique, on entend des sels se présentant à l'état liquide, ces liquides ioniques pouvant être représentés par la formule générale (I) suivante :

A⁺X⁻ (I)

dans laquelle :
*A⁺ représente un cation, généralement, organique ; et
*X⁻ représente un anion.

Dans le cas de l'invention, le cation est un cation organique porteur d'au moins une fonction polymérisable, à savoir une fonction susceptible de polymériser pour former un polymère résultant d'un enchaînement de motifs répétitifs issus de la polymérisation dudit groupe polymérisable.

De préférence, ladite fonction polymérisable est une fonction polymérisable par voie radicalaire, une telle fonction pouvant être avantageusement une fonction porteuse d'une insaturation, telle qu'un groupe vinylique et, plus spécifiquement, un groupe méthacrylate.

Un tel cation peut être symbolisé par la formule générale : 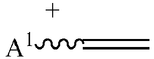 une seule fonction insaturée étant représentée ici par la double liaison =. La liaison ondulée représente une liaison covalente reliant un atome de carbone de la double liaison au groupe A¹. Il n'est pas exclu que d'autres groupes puissent être liés aux atomes de carbone de la double liaison, le parti pris de simplification ayant consisté, ici, à ne représenter que le groupe A¹.

Le cation peut être un composé comportant au moins un atome d'azote, au moins un atome de phosphore ou au moins un atome de soufre, dont la charge positive est portée par ledit atome d'azote, ledit atome de phosphore ou ledit atome de soufre, cet atome d'azote, de phosphore ou de soufre pouvant appartenir à une chaîne hydrocarbonée linéaire ou ramifiée ou à un cycle hydrocarboné.

En particulier, le cation peut être un composé comportant au moins un atome d'azote, dont la charge positive est portée par ledit atome d'azote, cet atome d'azote pouvant appartenir à une chaîne hydrocarbonée linéaire ou ramifiée ou à un cycle hydrocarboné.

Lorsque l'atome d'azote chargé positivement appartient à une chaîne hydrocarbonée linéaire ou ramifiée, le cation peut être un cation ammonium aliphatique et, plus spécifiquement, peut répondre à la formule générale (II) suivante : 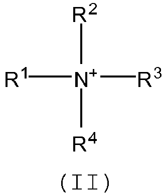 dans laquelle R¹, R², R³ et R⁴ représentent, indépendamment l'un de l'autre, un groupe hydrocarboné, avec l'un au moins des groupes R¹, R², R³ et R⁴ étant un groupe hydrocarboné porteur d'au moins une fonction polymérisable, telle que celle mentionnée ci-dessus.

Lorsqu'il n'est pas un groupe hydrocarboné porteur d'au moins une fonction polymérisable, le groupe hydrocarboné susmentionné peut être un groupe alkyle comprenant de 1 à 12 atomes de carbone, éventuellement fluoré.

Des exemples de tels cations peuvent être ceux de formules générales (III) et (IV) suivantes : 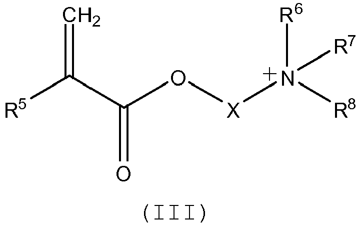 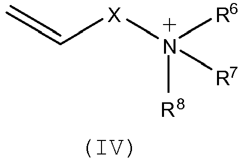 dans lesquelles :
- R⁶, R⁷ et R⁸ représentent, indépendamment l'un de l'autre, un groupe alkyle, éventuellement fluoré, comprenant de 1 à 12 atomes de carbone ;
- X représente un groupe alkylène, éventuellement fluoré, comprenant de 1 à 6 atomes de carbone ; et
- R⁵ représente un atome d'hydrogène ou un groupe méthyle.

Des exemples spécifiques tombant sous le coup de ces formules peuvent être les composés spécifiques de formules (V) et (VI) suivantes : 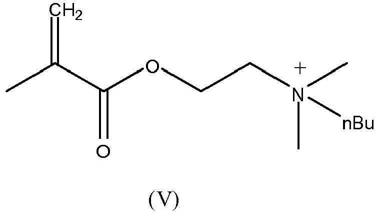 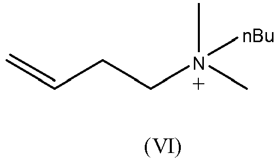 le premier composé étant le N,N,N,N-n-butyldiméthylméthacryloyloxyéthylammonium,
nBu correspondant au groupe n-butyle.

Lorsque l'atome d'azote chargé appartient à un cycle hydrocarboné, le cation peut répondre à l'une des formules (VII) et (VIII) suivantes : 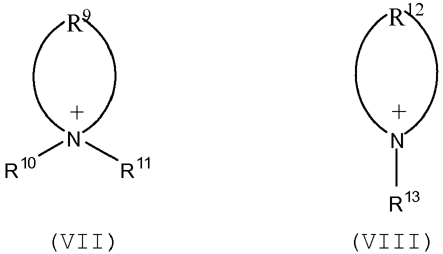 dans lesquelles :
- N⁺ et R⁹ forment ensemble un groupe alicyclique ;
- N⁺ et R¹² forment ensemble un groupe aromatique ;
- R¹⁰, R¹¹ et R¹³ représentent, indépendamment l'un de l'autre, un groupe hydrocarboné, avec l'un au moins des groupes R¹⁰, R¹¹ et R¹³ étant un groupe hydrocarboné porteur d'au moins une fonction polymérisable, telle que celle mentionnée ci-dessus.

Des exemples de cations de formule (VII) peuvent être des cations pipéridinium, des cations pyrrolidinium.

Des exemples spécifiques de cations de formule (VIII) peuvent être des cations imidazolium, des cations pyridinium.

De manière encore plus spécifique, des exemples de cations peuvent être ceux répondant aux formules (IX) et (X) suivantes : 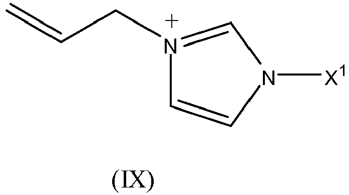 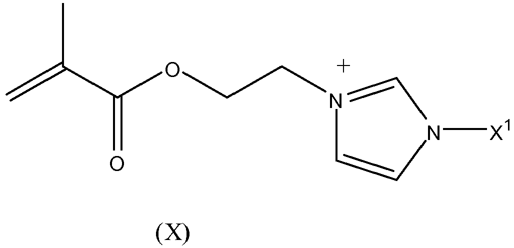 dans lesquelles X¹ représente un groupe alkyle, éventuellement fluoré, comprenant de 1 à 6 atomes de carbone.

Concernant l'anion du liquide ionique, il peut être un composé comprenant un hétéroatome porteur d'une charge négative, cet hétéroatome pouvant être choisi parmi un atome d'azote, un atome de bore, un atome de phosphore ou un atome de chlore.

Plus spécifiquement, il peut s'agir :
- d'un composé amidure, en particulier, perfluoré, tel qu'un composé *bis*(trifluorométhylsulfonyl)amidure (pouvant être également nommé « *bis*(trifluorométhanesulfonyl)imide ») de formule (XI) suivante : 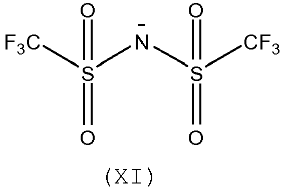
- d'un composé borate perfluoré, tel qu'un composé tétrafluoroborate de formule (XII) suivante : 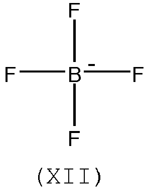
- d'un composé phosphate, tel qu'un composé de formule PF₆⁻ ; ou
- d'un composé chloré, tel qu'un composé chlorate de formule ClO₄⁻.

Un liquide ionique spécifique peut être un liquide ionique résultant de l'association :
- d'un cation ammonium aliphatique répondant à la formule générale (II) suivante : 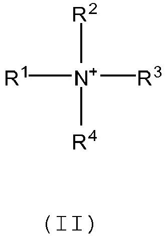 dans laquelle R¹, R², R³ et R⁴ représentent, indépendamment l'un de l'autre, un groupe hydrocarboné, avec l'un au moins des groupes R¹, R², R³ et R⁴ étant un groupe hydrocarboné porteur d'au moins une fonction polymérisable, telle que celle mentionnée ci-dessus ; et
- d'un anion amidure, de préférence, perfluoré,
un exemple particulier de liquide ionique entrant dans cette catégorie étant un liquide ionique résultant de l'association :
- d'un cation de formule (V) suivante : 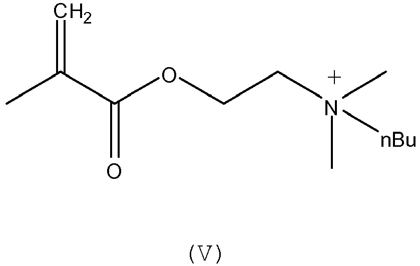 et
- d'un anion de formule (XI) suivante :

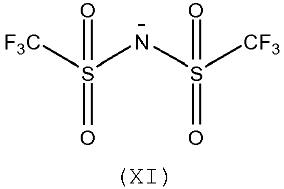

Ainsi le polymère ionique issu de la polymérisation d'un tel liquide ionique peut consister en un enchaînement d'un motif répétitif de formule (XIII) suivante :

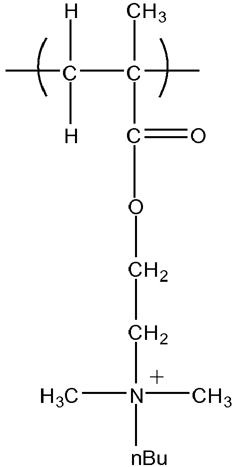

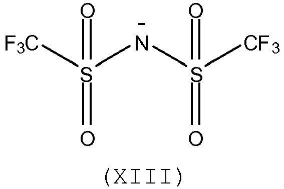

De manière plus générale, le polymère ionique issu de la polymérisation d'un liquide ionique, de formule générale simplifiée suivante : 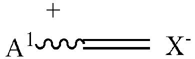 peut être représenté par la formule générale simplifiée suivante :

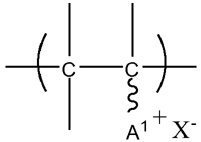

En outre, la polymérisation du liquide ionique nécessaire à la préparation du polymère ionique peut être réalisée en présence d'un ou plusieurs comonomères, en vue, notamment de modifier la température de transition vitreuse du polymère obtenu, d'améliorer la conductivité ionique, de faciliter la mise en oeuvre de la polymérisation et/ou de modifier les propriétés d'hydrophobicité.

Des exemples de comonomères peuvent être des comonomères vinyliques, tels que des comonomères méthacrylates et des comonomères styréniques.

De préférence, les fonctions polymérisables du comonomère sont de même nature que celles du cation du liquide ionique. En d'autres termes, lorsque le cation du liquide ionique comporte, par exemple, des fonctions (méth)acrylates, les fonctions polymérisables du comonomère sont également, de préférence, des fonctions (méth)acrylates.

Le polymère ionique présente la capacité de dissoudre et/ou dissocier le sel de lithium susmentionné et de permettre la conduction desdits ions lithium.

En outre, il peut présenter un caractère hydrophobe, notamment lorsqu'il est souhaité que la composition constitue une barrière à l'eau.

Le polymère ionique peut être compris dans la composition à une teneur allant de 1 à 95% en masse par rapport à la masse totale de la composition, de préférence de 1 à 50% en masse et, de préférence encore, de 10 à 50% en masse par rapport à la masse totale de la composition.

En outre, la composition comprend, également, outre les deux ingrédients susmentionnés, un polymère non ionique.

Ce polymère non ionique peut contribuer à assurer la tenue mécanique de la composition et lui conférer de la flexibilité et doit, de préférence, être résistant chimiquement et électrochimiquement au lithium métallique, c'est-à-dire être stable lorsqu'il est en contact avec le lithium métallique.

De préférence, il ne doit pas être réduit par le lithium métallique.

De plus, lorsque l'on souhaite que la composition soit une composition imperméable à l'eau, le polymère doit respecter, de préférence, les conditions suivantes :
- un caractère insoluble dans l'eau ;
- un caractère hydrophobe ; et
- une stabilité chimique vis-à-vis d'une solution aqueuse acide ou basique.

Enfin, de préférence, le polymère non ionique présente, avantageusement, une température de mise en oeuvre au moins supérieure à 50°C, la température de mise en oeuvre correspondant à la température de fusion dans le cas des polymères semi-cristallins fortement cristallins (à savoir, avec une cristallinité supérieure à 70%) ou à la température de transition vitreuse dans le cas des polymères amorphes.

Lorsque le polymère non ionique est un polymère semi-cristallin faiblement cristallin (à savoir, avec une cristallinité allant de 1 à 70%), il présente, de préférence, une température de fusion inférieure à 50°C et une température de transition vitreuse supérieure à 30°C.

Des polymères non ioniques pouvant répondre aux spécificités mentionnées ci-dessus sont des polymères appartenant à la famille des polyoléfines, des polymères styréniques, des polymères polyméthacrylates, des polymères polycarbonates et les mélanges de ceux-ci.

Plus précisément, à titre d'exemples de polyoléfines, on peut citer les polypropylènes, les polyéthylènes et les mélanges de ceux-ci.

En particulier, comme polypropylènes, il peut s'agir de polypropylènes, linéaires ou ramifiés, et plus spécifiquement, des polypropylènes atactiques, de polypropylènes syndiotactiques ou isotactiques.

Comme polyéthylènes, il peut s'agir du polyéthylènes, linéaires ou ramifiés, tels que du polyéthylène haute-densité, du polyéthylène basse-densité.

On précise que par polyéthylène basse-densité, on entend un polymère obtenu par polymérisation radicalaire de l'éthylène en opérant à de très hautes pressions (par exemple, 1 800 à 3 000 bars) à environ 200°C. Sa densité, voisine de 0,92 g.cm⁻³, est plus faible que celle du polyéthylène haute densité (présentant une densité de l'ordre de 0,95 g.cm⁻³), car sa structure révèle un taux de ramification supérieur à celui du polyéthylène haute-densité.

On précise que par polyéthylène haute-densité, on entend un polymère obtenu par polymérisation de l'éthylène présentant une densité de l'ordre de 0,95 g.cm⁻³.

Le polymère non ionique peut être compris dans la composition à une teneur allant de 1 à 95% en masse par rapport à la masse totale de la composition, de préférence, de 1 à 50% et, de préférence encore, de 5 à 25% en masse par rapport à la masse totale de la composition.

Les compositions de l'invention peuvent être préparées par un procédé comprenant une étape de polymérisation du liquide ionique susmentionné, lequel est compris dans un mélange comprenant, outre le liquide ionique, le sel de lithium et le polymère non ionique susmentionnés, un amorceur de polymérisation.

Ledit mélange peut être préparé préalablement à l'étape de polymérisation, par exemple, par la mise en oeuvre des opérations suivantes :
- une opération de mise en contact du sel de lithium avec le liquide ionique ;
- une opération d'ajout au mélange obtenu d'un amorceur de polymérisation ; et
- une opération d'ajout d'un polymère non ionique tel que défini ci-dessous.

L'amorceur de polymérisation tel que mentionné ci-dessus peut être un amorceur de polymérisation radicalaire, lequel peut être choisi parmi :
* les composés peroxypivalates, tels que peroxypivalate de *tert*-butyle, le peroxypyvalate de t-amyle ;
*les composés peroxydes, tels que le peroxyde de di-*tert*-butyle, le (*tert*-butylperoxy)-2,5-diméthylhexane et le peroxyde de benzoyle ;
*les composés persulfates, tels que le persulfate de potassium, le persulfate de sodium ou le persulfate d'ammonium ;
*les composés azoïques, tels que l'azobisisobutyronitrile (connu sous l'abréviation AIBN) ; et
*les composés carbonates, tels que le peroxydicarbonate de *bis*(4-*tert*-butyle cyclohexyle).

L'homme du métier choisira les conditions opératoires, notamment en termes de température et de durée pour effectuer la polymérisation du liquide ionique.

De par ses propriétés intrinsèques, et notamment de par ses propriétés de conduction ionique, les compositions sont tout à fait adaptées pour être utilisées en tant membrane électrolytique d'un générateur électrochimique au lithium et, spécifiquement d'un accumulateur au lithium, tel qu'une batterie lithium-métal ou une batterie lithium-air.

Il s'entend que ladite membrane, pour assurer sa fonction électrolytique au sein d'une générateur électrochimique au lithium, ne sera pas conductrice électronique.

Outre sa fonction électrolytique, cette membrane assure une fonction séparatrice entre l'électrode négative et l'électrode positive du générateur électrochimique au lithium.

Elle permet également de protéger des effets néfastes de l'eau d'une électrode négative, notamment lorsque celle-ci est à base de lithium métallique ou d'un composé d'insertion du lithium. Elle est donc parfaitement adaptée pour les accumulateurs au lithium (en particulier, les batteries lithium-air), qui peuvent fonctionner avec des électrolytes aqueux (acides ou basiques).

Elle peut être autosupportée (ce qui implique qu'elle soit ensuite mise ultérieurement en contact avec l'électrode négative et l'électrode positive d'un générateur électrochimique au lithium) ou peut être réalisée directement sur l'une des électrodes.

Ainsi, la présente invention a également pour objet une membrane comprenant une composition telle que définie ci-dessus, laquelle membrane est une membrane électrolytique pour un générateur électrochimique au lithium, et de préférence, pour un accumulateur au lithium comportant, comme électrode négative, une électrode à base de lithium métallique.

Les membranes peuvent être préparées de la même façon que les compositions mentionnées ci-dessus, sur un support, qui peut être une feuille en polytétrafluoroéthylène, une feuille en métal tel que du cuivre ou de l'aluminium.

Les membranes peuvent présenter une épaisseur allant, par exemple, de 0,5 à 1000 µm.

Les membranes peuvent présenter une conductivité ionique comprise entre 1*10⁻⁷ S.cm⁻¹ et 1*10⁻² S.cm⁻¹.

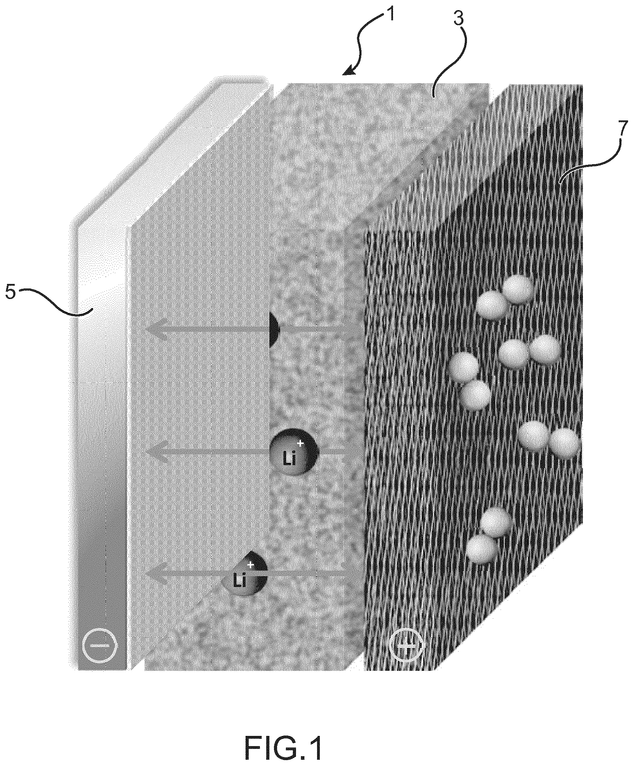

La présente invention a également pour objet un générateur électrochimique au lithium, tel que représenté selon un mode particulier de réalisation sur la figure 1, ledit générateur électrochimique comprenant au moins une cellule (référencée 1) comprenant une membrane 3 telle que définie ci-dessus disposée entre une électrode négative 5 et une électrode positive 7, ladite électrode négative étant, de préférence, une électrode à base de lithium métallique.

Ledit générateur électrochimique au lithium peut être un accumulateur au lithium, tel qu'une batterie lithium-métal ou une batterie lithium-air. Elle peut être également une batterie lithium-ion ou une batterie lithium-soufre.

Lorsqu'il s'agit d'une batterie lithium-air, l'électrode positive est une électrode à air, qui peut comprendre :
- au moins un matériau conducteur électronique ;
- au moins un catalyseur ; et
- éventuellement, au moins un liant pour assurer la cohésion entre ledit matériau et ledit catalyseur.

Le matériau conducteur électronique peut être, de préférence, un matériau carboné, à savoir un matériau comprenant du carbone à l'état élémentaire.

Le catalyseur susmentionné est, d'un point de vue fonctionnel, un catalyseur apte à accélérer les réactions électrochimiques se produisant au niveau de l'électrode à air (que l'on soit en processus de décharge ou de charge) et, également, apte à augmenter la tension opérationnelle, à laquelle ces réactions électrochimiques ont lieu.

Pour assurer une cohésion entre le matériau conducteur électronique et le catalyseur, l'électrode négative peut comprendre un ou plusieurs liants, en particulier, un ou plusieurs liants polymériques.

Lorsqu'il s'agit d'une batterie lithium-métal, le matériau d'électrode positive peut être du soufre, du dioxyde de manganèse MnO₂, du CFₓ (ou, en d'autres termes, du graphite fluoré), du SOCl₂ ou un composé de formule LiₓM_{y}(XO_{z})ₙ dans laquelle :
*M représente un élément choisi parmi Mn, Fe, Co, Ni, Cu, Mg, Zn, V, Ti, Al, Si, B, Cr, Mo et les mélanges de ceux-ci ;
*X représente un élément choisi parmi P, Si, Ge, S, V et As ;
*x, y, z et n sont des nombres entiers ou nombres décimaux positifs choisis de telle sorte que la charge totale des cations compense la charge totale des anions, de sorte à ce que le composé soit électriquement neutre.

De préférence, M représente un élément choisi parmi Mn, Fe, Co, Ni, Cu, V, Ti, B, Cr, Mo et les mélanges de ceux-ci.

Pour préparer un accumulateur au lithium tel que défini ci-dessus, par exemple, une batterie lithium-ion, lithium-métal, lithium-soufre, deux voies de synthèse peuvent être envisagées :
- une première voie consistant à presser à chaud une membrane telle que définie ci-dessus entre une électrode négative et une électrode positive ;
- une deuxième voie consistant à former directement la membrane telle que définie ci-dessus sur l'une des électrodes et à presser à chaud l'ensemble résultant sur l'autre électrode.

Pour préparer une batterie lithium-air, la membrane peut être déposée directement sur le lithium métal, l'ensemble résultant étant ensuite assemblé avec les autres constituants de la batterie (lesquels peuvent être respectivement, un collecteur de courant pour l'électrode en lithium, un séparateur imprégné d'électrolyte liquide en contact avec la membrane, l'autre électrode et son collecteur de courant).

Enfin, comme mentionné ci-dessus, la composition de l'invention peut également être destinée à former une ensemble électrode-membrane, auquel cas la composition comprend, avantageusement, en outre, les ingrédients nécessaires à l'obtention d'une électrode.

Par exemple, lorsque l'électrode est destinée à constituer une électrode de batterie lithium-ion, et plus spécifiquement, une électrode positive ou une électrode négative, les ingrédients peuvent consister en des matériaux carbonés, des composés inorganiques lithiés et pour une électrode négative, éventuellement aussi du graphite ou du silicium.

A titre d'exemples de matériaux carbonés, on peut citer carbone SLP30 ou du noir de carbone.

A titre d'exemples de composés inorganiques lithiés, on peut citer des composés lithiés polyanioniques de métaux de transition, tels que les composés lithiés répondant à la formule générale suivante :

LiₓM_{y}(XO_{z})ₙ

dans laquelle :
*M représente un élément choisi parmi Mn, Fe, Co, Ni, Cu, Mg, Zn, V, Ti, Al, Si, B, Cr, Mo et les mélanges de ceux-ci ;
*X représente un élément choisi parmi P, Si, Ge, S, V et As ;
*x, y, z et n sont des nombres entiers ou nombres décimaux positifs choisis de telle sorte que la charge totale des cations compense la charge totale des anions, de sorte à ce que le composé soit électriquement neutre.

De préférence, M représente un élément choisi parmi Mn, Fe, Co, Ni, Cu, V, Ti, B, Cr, Mo et les mélanges de ceux-ci.

Plus précisément, de tels composés peuvent correspondre au cas où X correspond à l'élément phosphore P, auquel cas ces composés constituent des composés phosphates de lithium. De tels composés peuvent être, par exemple, LiFePO₄ ou Li₃V₂(PO₄)₃.

Ainsi, l'invention peut avoir également pour visée un ensemble électrode-membrane comprenant une telle composition ainsi qu'un générateur électrochimique au lithium comprenant au moins une cellule comprenant un tel ensemble.

L'invention va maintenant être décrite, en référence aux exemples suivants, donnés à titre indicatif et non limitatif.

### BREVE DESCRIPTION DES FIGURES

La figure 1 est une vue en coupe transversale d'une batterie conforme à l'invention.

Les figures 2a et 2b sont deux graphiques illustrant l'évolution de l'impédance à 35°C pour la membrane préparée selon l'exemple 2.

La figure 3 est un graphique illustrant l'évolution de la conductivité ionique C (en mS.cm⁻¹) en fonction de la température T (1000/K pour l'abscisse inférieure) ou (°C pour l'abscisse supérieure) pour la membrane préparée selon l'exemple 2.

La figure 4 est un graphique illustrant les courbes de cyclages U (en V) en fonction du temps T (en heures) pour une pile monocellule réalisée conformément à l'exemple 3.

La figure 5 est un graphique illustrant les courbes montrant l'évolution de la capacité C (en mAh) en charge (courbe a) et en décharge (courbe b) en fonction du nombre de cycles N pour une pile monocellule réalisée conformément à l'exemple 3.

La figure 6 est un graphique illustrant les courbes de cyclages U (en V) en fonction du temps T (en heure) pour une pile monocellule réalisée conformément à l'exemple 4.

La figure 7 est un graphique illustrant les courbes montrant l'évolution de la capacité C (en mAh) en charge (courbe a) et en décharge (courbe b) en fonction du nombre de cycles N pour une pile monocellule réalisée conformément à l'exemple 4.

### EXPOSÉ DÉTAILLÉ DE MODES DE RÉALISATION PARTICULIERS

### EXEMPLE 1

Le présent exemple illustre la préparation d'une membrane souple conductrice d'ions lithium autosupportée.

L'ensemble des étapes constitutives de la préparation de la membrane est réalisé en boîte à gants.

Tout d'abord, du polypropylène amorphe (0,5 g), présentant une masse moléculaire en masse M_{w} de 14000 et une masse moléculaire en nombre Mₙ de 3700, est mélangé avec du toluène (0,5 g) dans un premier conteneur en verre. Le mélange résultant est chauffé à 90°C et est mélangé pendant 48 heures jusqu'à obtenir un mélange homogène. Du bis(trifluorométhanesulfonyl)imide de lithium (symbolisé par l'abréviation LiTFSI) constituant un sel de lithium (193,5 mg) est ajouté dans un second conteneur en verre à 300 mg de tétrahydrofurane (THF). A ce dernier, est ajouté 1 g de liquide ionique (symbolisé par l'abréviation IL) N,N,N,N-n-butyldiméthylméthacryloyloxyéthylammonium (*bis*(trifluorométhanesulfonyl)imide) (Masse molaire : 494,48 g/mol) (le rapport molaire LiTFSI/IL étant de 25 :75) et mélangé à l'aide d'un barreau aimanté pendant 15 minutes à 800 tours/minute. La solution résultante est versée dans le premier conteneur en verre puis le mélange résultant est agité vigoureusement à l'aide du barreau aimanté pendant 30 minutes. A l'issue de ces 30 minutes, il est ajouté de l'azobisisobutyronitrile (symbolisé par l'abréviation AIBN) selon une proportion de 2% massique par rapport à la masse du liquide ionique susmentionné (soit 20 mg d'AIBN). Une fois l'ajout d'AIBN effectué, le mélange est encore agité jusqu'à dissolution complète de l'AIBN. Ensuite, le mélange est enduit à l'aide d'une racle réglée à une hauteur de 200 µm sur une feuille en polytétrafluoroéthylène. Après enduction, la feuille est placée à 60°C pendant 24 heures puis 3 heures sous vide toujours à 60°C. On obtient ainsi une membrane autosupportée apte à conduire des ions lithium. De plus, grâce à l'ajout de polypropylène, la membrane est étanche à l'eau.

En variante, la dernière étape d'enduction peut être faite sur une feuille de PTFE, sur laquelle est placée une feuille de lithium (2*2 cm²) présentant une épaisseur de 135 µm), la membrane résultante présentant une épaisseur de 55 µm.

### EXEMPLE 2

La membrane obtenue selon l'exemple 1 est soumise à des essais pour déterminer la conductivité ionique de celle-ci en vue d'évaluer ses performances.

Pour ce faire, un disque de 14 mm est découpé, dans la membrane, grâce à un emporte-pièce.

Après avoir mesuré l'épaisseur de la membrane avec un micromètre Palmer, le disque est placé entre 4 cales d'acier, qui sont elles-mêmes insérées dans une pile bouton (Pile CR2032). Un ressort est placé entre l'un des capots de la pile et l'une des cales pour assurer un contact optimal de la membrane entre les deux cales. Cette pile bouton est élaborée en vue d'effectuer des mesures de spectroscopie d'impédance de la membrane.

Les mesures de spectroscopie d'impédance sont effectuées avec un potentiostat Biologie VMP3 à une tension de 20 mV et en faisant varier les fréquences de 1 MHz à 100 mHz avec 11 points par décades. Les mesures sont réalisées à différentes températures puis il est élaboré un graphique illustrant la variation de la conductivité en fonction de l'inverse de la température.

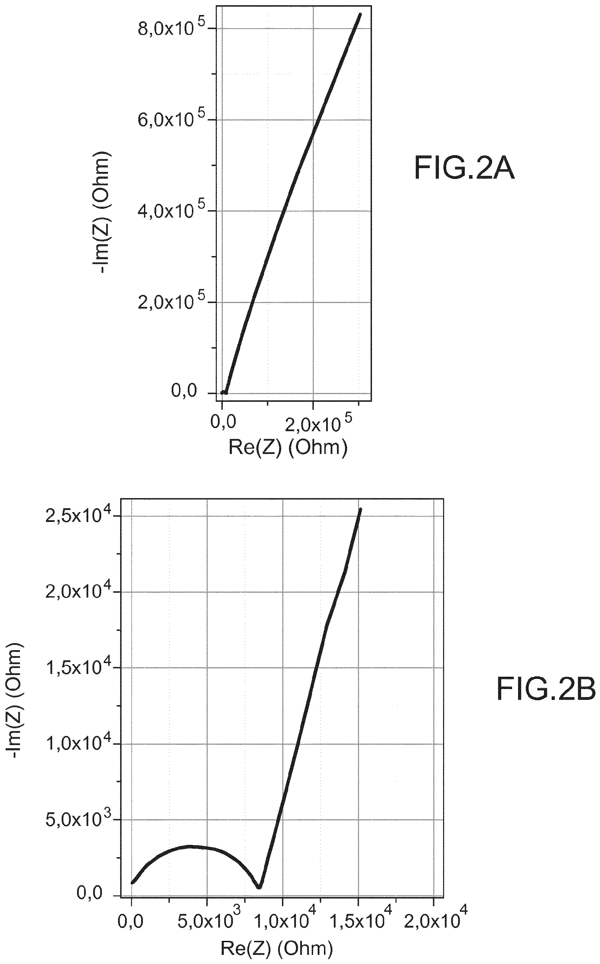

Les figures 2a et 2b (la figure 2b étant un vue agrandie d'une partie de la figure 2a) représente un diagramme de Nyquist obtenu pour la température de 35°C, l'ordonnée -lm(Z) (en Ohms) correspondant à la valeur absolue de la partie imaginaire de l'impédance et l'abscisse Re(Z) (en Ohms) correspondant à la partie réelle de l'impédance. De ce diagramme, il est possible d'extraire la valeur de conductivité à 35°C.

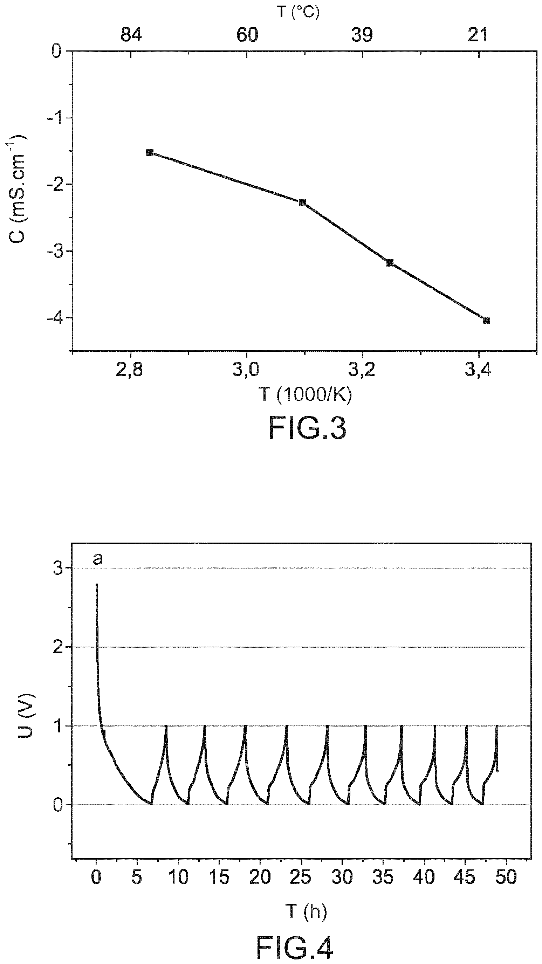

L'opération a été réitérée à plusieurs températures, le résultat des conductivités obtenues étant reporté sur la figure 3, qui illustre l'évolution de la conductivité en fonction de l'inverse de la température. De cette figure, il découle, notamment, que, pour une température de 80°C, la conductivité obtenue est de 5*10⁻² mS/cm.

### EXEMPLE 3

Cet exemple a pour objectif de démontrer la capacité de conduction aux ions lithium d'un polymère ionique pouvant être utilisé dans les compositions de l'invention.

Pour ce faire, il est préparé, initialement, une demi-pile comprenant une électrode positive à base de graphite et d'un liant polymérique comprenant un polymère non ionique susceptible d'entrer dans les compositions de l'invention et comprenant, en outre, une membrane électrolytique conforme à l'invention déposée sur une face de l'électrode positive.

L'ensemble des étapes constitutives de la préparation de la demi-pile susmentionnée est réalisé en boîte à gants.

Dans un premier temps, 1 g de carbone SLP30 est pesé dans un premier conteneur en verre.

Dans un deuxième temps, du bis(trifluorométhanesulfonyl)imide de lithium (symbolisé par l'abréviation LiTFSI) constituant un sel de lithium (193 mg) est ajouté dans un second conteneur en verre à 300 mg de tétrahydrofurane (THF). Après agitation pendant plusieurs minutes à 400 tours/min, 1 g de liquide ionique (symbolisé par l'abréviation IL) N,N,N,N-n-butyldiméthylméthacryloyloxyéthylammonium (*bis*(trifluorométhanesulfonyl)imide) (Masse molaire : 494,48 g/mol) est ajouté à ce mélange puis mélangé à l'aide d'un barreau aimanté pendant 5 minutes à 400 tours/minute. Ainsi, le rapport molaire LiTFSI/IL est de 25 :75. Au dernier moment, il est ajouté de l'azobisisobutyronitrile (symbolisé par l'abréviation AiBN) selon une proportion de 2% massique par rapport à la masse du liquide ionique susmentionné (soit 20 mg d'AiBN). Une fois l'ajout d'AiBN effectué, le mélange est encore agité jusqu'à dissolution complète de l'AiBN. Les contenus du premier conteneur et du second conteneur sont ensuite réunis, avec un ajout de 1 g de THF pour faciliter le mélange et l'enduction. Ainsi, le pourcentage molaire de carbone SLP30 : IL est de 45 :55. Le tout est mélangé à l'aide d'une spatule. Ensuite, le mélange est enduit à l'aide d'une racle réglée à une hauteur de 200 µm sur une feuille de cuivre. Après enduction, la feuille est placée à 60°C pendant 24 heures.

La membrane de l'invention est ensuite déposée sur l'électrode positive par enduction avec une racle sur une hauteur de 50 µm dans les mêmes conditions que dans l'exemple 1, si ce n'est que le support est l'électrode positive.

De l'ensemble résultant, une pastille de 14 mm est découpée grâce à un emporte-pièce puis une pile est assemblée de la manière suivante.

Une pastille en lithium métallique est placée sur la pastille préalablement découpée et est disposée dans une pile bouton de type CR2032.

La pile ainsi obtenue est soumise à des essais de cyclage avec un courant de 100 µA avec un potentiostat Arbin en ayant préalablement placé la pile bouton dans une enceinte climatique à 80°C.

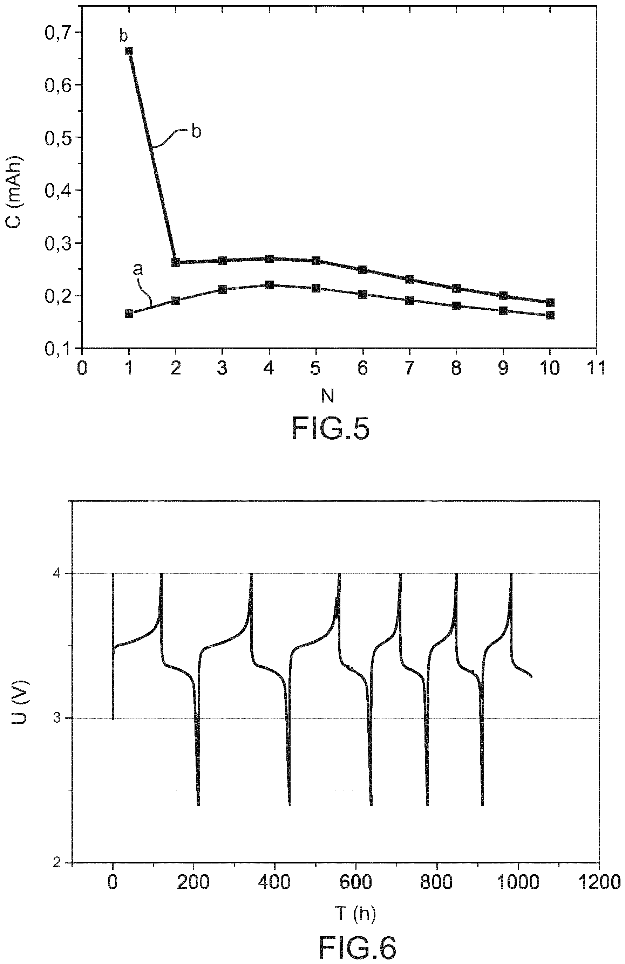

Les courbes de tension en fonction du temps ainsi que les capacités en charge et décharge en fonction du nombre de cycles sont visibles sur les figures 4 et 5 jointes en annexe.

De la figure 4, l'on constate que la batterie cycle sur au moins 10 cycles et de la figure 5, que, après une perte de capacité lors de la première charge, cette capacité se stabilise rapidement.

### EXEMPLE 4

Cet exemple a pour objectif de démontrer la capacité de conduction aux ions lithium d'un polymère ionique pouvant être utilisé dans les compositions de l'invention.

Pour ce faire, il est préparé, initialement, une demi-pile comprenant une électrode positive à base de LiFePO₄ et d'un liant polymérique comprenant un polymère non ionique susceptible d'entrer dans les compositions de l'invention et comprenant, en outre, une membrane électrolytique conforme à l'invention déposée sur une face de l'électrode positive.

L'ensemble des étapes constitutives de la préparation de la demi-pile susmentionnée est réalisé en boîte à gants.

Dans un premier temps, 0,9 g de LiFePO₄ (symbolisé ci-après LFP) est pesé, dans un premier conteneur en verre, avec 0,1 g de noir de carbone. Le mélange est broyé à l'aide d'un mortier et d'un pilon avec 2 g de cyclohexane. Il est récupéré dans le premier conteneur en verre, une fois que le cyclohexane s'est totalement évaporé.

Dans un deuxième temps, du *bis*(trifluorométhanesulfonyl)imide de lithium (symbolisé par l'abréviation LiTFSI) constituant un sel de lithium (193 mg) est ajouté dans un second conteneur en verre à 300 mg de tétrahydrofurane (THF). Après agitation pendant plusieurs minutes à 400 tours/min, 1 g de liquide ionique (symbolisé par l'abréviation IL) N,N,N,N-butyldiméthylméthacryloyloxyéthylammonium (*bis*(trifluorométhanesulfonyl)imide) (Masse molaire : 494,48 g/mol) est ajouté à ce mélange puis mélangé à l'aide d'un barreau aimanté pendant 5 minutes à 400 tours/minute. Ainsi, le rapport molaire LiTFSI/IL est de 25 :75. Au dernier moment, il est ajouté de l'azobisisobutyronitrile (symbolisé par l'abréviation AiBN) selon une proportion de 2% massique par rapport à la masse de liquide ionique susmentionné (soit 20 mg d'AiBN). Une fois l'ajout d'AiBN effectué, le mélange est encore agité jusqu'à dissolution complète de l'AiBN. Les contenus du premier et second conteneurs sont ensuite réunis, avec un ajout de 1 g de THF pour faciliter le mélange et l'enduction. Ainsi, le pourcentage molaire de carbone LFP :IL est de 47 :53. Le tout est mélangé à l'aide d'une spatule. Ensuite, le mélange est enduit à l'aide d'une racle réglée à une hauteur de 200 µm sur une feuille d'aluminium. Après enduction, la feuille est placée à 60°C pendant 24 heures.

La membrane de l'invention est ensuite déposée sur l'électrode positive par enduction avec une racle sur une hauteur de 50 µm dans les mêmes conditions que dans l'exemple 1, si ce n'est que le support est l'électrode positive.

De l'ensemble résultant, une pastille de 14 mm est découpée grâce à un emporte-pièce puis une pile est assemblée de la manière suivante.

La pile ainsi obtenue est soumise à des essais de cyclage avec un courant de 100 µA avec un potentiostat Arbin en ayant préalablement placé la pile bouton dans une enceinte climatique à 80°C.

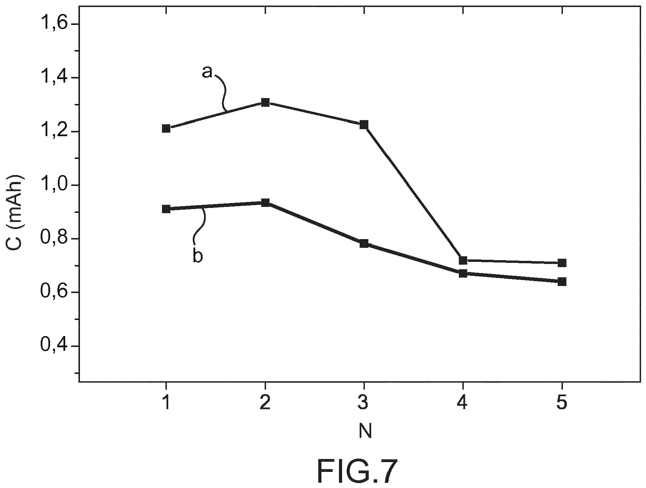

Les courbes de tension en fonction du temps ainsi que les capacités en charge et décharge en fonction du nombre de cycles sont visibles sur les figures 6 et 7 jointes en annexe.

De la figure 6, l'on constate que la batterie cycle sur au moins 10 cycles.

De la figure 7, l'on constate que la capacité est stabilisée à partir du 4^{ème} cycle. Qui plus est, le rapport entre la décharge et la charge est supérieur à 90% à partir du 4^{ème} cycle.

## Revendications

1. Composition polymère conductrice d'ions lithium comprenant les ingrédients suivantes :
- au moins un polymère ionique issu de la polymérisation d'un liquide ionique, dont le cation est porteur d'au moins une fonction polymérisable ;
- au moins un sel de lithium ; et
- au moins un polymère non ionique,
laquelle composition est une composition solide, c'est-à-dire une composition dénuée d'eau et de solvant(s) organique(s).

2. Composition selon la revendication 1, dans laquelle le sel de lithium est choisi dans le groupe constitué par LiPF₆, LiClO₄, LiBF₄, LiAsF₆, LiCF₃SO₃, le *bis*(trifluorométhanesulfonyl)imide de lithium LiN[SO₂CF₃]₂, le *bis*(pentafluoroéthanesulfonyl)imide LiN(C₂F₅SO₂)₂ et les mélanges de ceux-ci.

3. Composition selon l'une quelconque des revendications précédentes, dans laquelle le cation est un composé comportant au moins un atome d'azote, au moins un atome de phosphore ou au moins un atome d'azote, dont la charge positive est portée par ledit atome d'azote, ledit atome de phosphore ou ledit atome d'azote, cet atome pouvant appartenir à une chaîne hydrocarbonée linéaire ou ramifiée ou à un cycle hydrocarboné.

4. Composition selon la revendication 3, dans laquelle, lorsque l'atome d'azote chargé positivement appartient à une chaîne hydrocarbonée linéaire ou ramifiée, le cation est un cation ammonium aliphatique répondant à la formule générale (II) suivante : 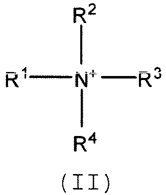 dans laquelle R¹, R², R³ et R⁴ représentent, indépendamment l'un de l'autre, un groupe hydrocarboné, avec l'un au moins des groupes R¹, R², R³ et R⁴ étant un groupe hydrocarboné porteur d'au moins une fonction polymérisable.

5. Composition selon l'une quelconque des revendications précédentes, dans laquelle l'anion est un composé comprenant un hétéroatome porteur d'une charge négative, cet hétéroatome étant choisi parmi un atome d'azote, un atome de bore, un atome de phosphore ou un atome de chlore.

6. Composition selon l'une quelconque des revendications précédentes, dans laquelle l'anion est un composé *bis*(trifluorométhylsulfonyl)amidure de formule (XI) suivante :

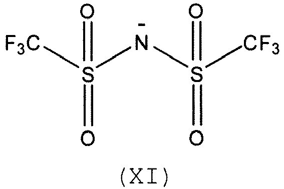

7. Composition selon l'une quelconque des revendications précédentes, dans laquelle le liquide ionique est un liquide ionique résultant de l'association :
- d'un cation de formule (V) suivante : 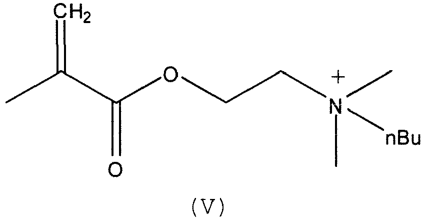 et
- d'un anion de formule (XI) suivante :

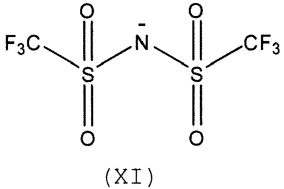

8. Composition selon l'une quelconque des revendications précédentes dans laquelle le polymère non ionique est choisi parmi les polyoléfines, les polymères styréniques, les polymères polyméthacrylates, les polymères polycarbonates et les mélanges de ceux-ci.

9. Composition selon l'une quelconque des revendications précédentes, comprenant, entre autres, des ingrédients nécessaires à la constitution d'une électrode.

10. Procédé de préparation d'une composition conductrice polymère conductrice d'ions lithium comprenant les ingrédients suivantes :
- au moins un polymère ionique issu de la polymérisation d'un liquide ionique, dont le cation est porteur d'au moins une fonction polymérisable ;
- au moins un sel de lithium ; et
- au moins un polymère non ionique ;
laquelle composition est une composition solide, c'est-à-dire une composition dénuée d'eau et de solvant(s) organique(s),
ledit procédé comprenant une étape de polymérisation du liquide ionique susmentionné, lequel est compris dans un mélange comprenant, outre le liquide ionique, le sel de lithium et le polymère non ionique susmentionnés, un amorceur de polymérisation.

11. Membrane comprenant une composition telle que définie selon l'une quelconque des revendications 1 à 9.

12. Générateur électrochimique au lithium comprenant au moins une cellule comprenant une membrane telle que définie selon la revendication 11, ladite membrane étant disposée entre une électrode négative et une électrode positive.

13. Générateur électrochimique au lithium selon la revendication 12, dans laquelle l'électrode négative est une électrode à base de lithium métallique.

14. Ensemble électrode-membrane comprenant une composition telle que définie à la revendication 9.

15. Générateur électrochimique au lithium comprenant au moins une cellule comprenant un ensemble électrode-membrane tel que défini à la revendication 14.

## Patentansprüche

1. Polymerzusammensetzung zur Leitung von Lithiumionen, umfassend die folgenden Ingredienzien:
- wenigstens ein ionisches Polymer, das aus der Polymerisation einer ionischen Flüssigkeit stammt, deren Kation Träger wenigstens einer polymerisierbaren Funktion ist;
- wenigstens ein Lithiumsalz; und
- wenigstens ein nichtionisches Polymer,
welche Zusammensetzung eine feste Zusammensetzung ist, das heißt eine Zusammensetzung ohne Wasser und ohne organische(s) Lösungsmittel.

2. Zusammensetzung nach Anspruch 1, wobei das Lithiumsalz ausgewählt ist aus der Gruppe gebildet durch LiPF₆, LiClO₄, LiBF₄, LiAsF₆, LiCF₃SO₃, *bis*(Trifluormethansulfonyl)imid von Lithium LiN[SO₂CF₃]₂, *bis*(Pentafluorethansulfonyl)imid LiN (C₂F₅SO₂)₂ und deren Mischungen.

3. Zusammensetzung nach einem der vorhergehenden Ansprüche, wobei das Kation eine Verbindung ist, die wenigstens ein Stickstoffatom umfasst, wenigstens ein Phosphoratom oder wenigstens ein Stickstoffatom, dessen positive Ladung durch das Stickstoffatom, das Phosphoratom oder das Stickstoffatom getragen wird, wobei dieses Atom zu einer linearen oder verzweigten Kohlenwasserstoffkette gehören kann, oder zu einem Kohlenwasserstoffring.

4. Zusammensetzung nach Anspruch 3, wobei dann, wenn das positiv geladene Stickstoffatom zu einer linearen oder verzweigten Kohlenwasserstoffkette gehört, das Kation ein aliphatisches Ammoniumkation ist, das der nachfolgenden allgemeinen Formel (II) entspricht: 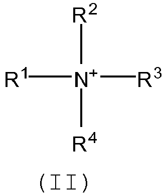 wobei R¹, R², R³ und R⁴ unabhängig voneinander eine Kohlenwasserstoffgruppe repräsentieren, wobei wenigstens eine der Gruppen R¹, R², R³ und R⁴ eine Kohlenwasserstoffgruppe ist, die Träger wenigstens einer polymerisierbaren Funktion ist.

5. Zusammensetzung nach einem der vorherigen Ansprüche, wobei das Anion eine Verbindung ist, die ein Heteroatom umfasst, das Träger einer negativen Ladung ist, wobei dieses Heteroatom ausgewählt ist aus einem Stickstoffatom, einem Boratom, einem Phosporatom oder einem Chloratom.

6. Zusammensetzung nach einem der vorherigen Ansprüche, wobei das Anion eine *bis*(Trifluormethylsulfonyl)Amidverbindung der nachfolgenden Formel (XI) ist:

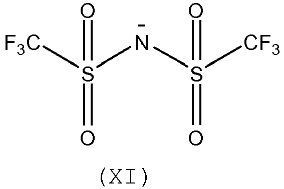

7. Zusammensetzung nach einem der vorhergehenden Ansprüche, wobei die ionische Flüssigkeit eine ionische Flüssigkeit ist, die resultiert aus der Assoziation:
- eines Kations der nachfolgenden Formel (V): 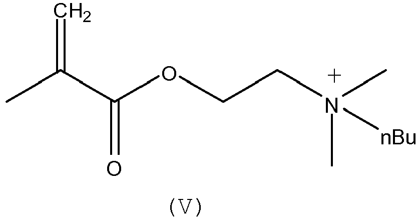 und
- eines Anions der nachfolgenden Formel (XI):

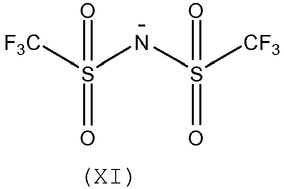

8. Zusammensetzung nach einem der vorherigen Ansprüche, wobei das nichtionische Polymer ausgewählt ist aus den Polyolefinen, den Styrolpolymeren, den Polymethacrylatpolymeren, den Polycarbonatpolymeren und deren Mischungen.

9. Zusammensetzung nach einem der vorherigen Ansprüche, die unter anderen Ingredienzien enthält, die für die Bildung einer Elektrode erforderlich sind.

10. Verfahren zur Herstellung einer leitenden Polymerzusammensetzung zur Leitung von Lithiumionen, umfassend die folgenden Ingredienzien:
- wenigstens ein ionisches Polymer, das aus der Polymerisation einer ionischen Flüssigkeit stammt, deren Kation Träger wenigstens einer polymerisierbaren Funktion ist;
- wenigstens ein Lithiumsalz; und
- wenigstens ein nichtionisches Polymer;
welche Zusammensetzung eine feste Zusammensetzung ist, das heißt eine Zusammensetzung ohne Wasser und ohne organische(s) Lösungsmittel,
wobei das Verfahren einen Schritt der Polymerisation der genannten ionischen Flüssigkeit umfasst, die in einer Mischung enthalten ist, welche außer der ionischen Flüssigkeit das genannte Lithiumsalz, das genannte nichtionische Polymer und einen Polymerisationsinitiator aufweist.

11. Membran, umfassend eine Zusammensetzung wie in einem der Ansprüche 1 bis 9 definiert.

12. Elektrochemischer Lithiumgenerator, umfassend wenigstens eine Zelle, die eine Membran wie in Anspruch 11 definiert enthält, wobei die Membran zwischen einer negativen Elektrode und einer positiven Elektrode angeordnet ist.

13. Elektrochemischer Lithiumgenerator nach Anspruch 12, wobei die negative Elektrode eine Elektrode auf Basis von metallischem Lithium ist.

14. Elektrode-Membran-Gruppe, umfassend eine Zusammensetzung wie in Anspruch 9 definiert.

15. Elektrochemischer Lithiumgenerator, umfassend wenigstens eine Zelle, die eine Elektrode-Membran-Gruppe wie in Anspruch 14 definiert umfasst.

## Claims

1. Polymer composition that conducts lithium ions including the following ingredients:
- at least one ionic polymer from the polymerisation of an ionic liquid, the cation of which bears at least one polymerisable function;
- at least one lithium salt; and
- at least one non-ionic polymer,
said composition being a solid composition, i.e. a composition devoid of water and organic solvent(s).

2. Composition according to claim 1, in which the lithium salt is selected from the group constituted of LiPF₆, LiClO₄, LiBF₄, LiAsF₆, LiCF₃SO₃, lithium *bis*(trifluoromethanesulfonyl)imide LiN[SO₂CF₃]₂, *bis*(pentafluoroethanesulfonyl)imide LiN(C₂F₅SO₂)₂ and mixtures thereof.

3. Composition according to any of the preceding claims, in which the cation is a compound comprising at least one nitrogen atom, at least one phosphorous atom or at least one nitrogen atom, the positive charge of which is borne by said nitrogen atom, said phosphorous atom or said nitrogen atom, said atom being able to belong to a linear or branched hydrocarbon chain or to a hydrocarbon ring.

4. Composition according to claim 3, in which, when the positively charged nitrogen atom belongs to a linear or branched hydrocarbon chain, the cation is an aliphatic ammonium cation responding to the following generic formula (II): 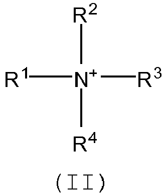 in which R¹, R², R³ and R⁴ represent, independently of each other, a hydrocarbon group, with at least one of the groups R¹, R², R³ and R⁴ being a hydrocarbon group bearing at least one polymerisable function.

5. Composition according to any of the preceding claims, in which the anion is a compound including a heteroatom bearing a negative charge, said heteroatom being selected from a nitrogen atom, a boron atom, a phosphorous atom or a chlorine atom.

6. Composition according to any of the preceding claims, in which the anion is a *bis*(trifluoromethylsulfonyl)amide compound of following formula (XI):

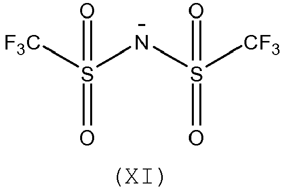

7. Composition according to any of the preceding claims, in which the ionic liquid is an ionic liquid resulting from the association:
- of a cation of following formula (V): 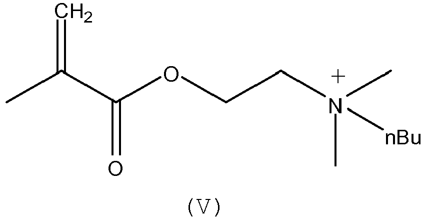 and
- of an anion of following formula (XI):

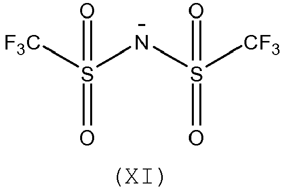

8. Composition according to any of the preceding claims in which the non-ionic polymer is selected from polyolefins, styrenic polymers, polymethacrylate polymers, polycarbonate polymers and mixtures thereof.

9. Composition according to any of the preceding claims, including, among others, ingredients necessary for the formation of an electrode.

10. Method for preparing a conducting polymer composition that conducts lithium ions including the following ingredients:
- at least one ionic polymer from the polymerisation of an ionic liquid, the cation of which bears at least one polymerisable function;
- at least one lithium salt; and
- at least one non-ionic polymer;
said method including a step of polymerisation of the aforementioned ionic liquid, which is comprised in a mixture including, apart from the aforementioned ionic liquid, lithium salt and non-ionic polymer, a polymerisation initiator.

11. Membrane including a composition as defined according to any of claims 1 to 9.

12. Electrochemical lithium generator including at least one cell including a membrane as defined in claim 11, said membrane being arranged between a negative electrode and a positive electrode.

13. Electrochemical lithium generator according to claim 12, in which the negative electrode is a lithium metal based electrode.

14. Electrode-membrane assembly including a composition as defined in claim 9.

15. Electrochemical lithium generator including at least one cell including an electrode-membrane assembly as defined in claim 14.
